# EUROPÄISCHE PATENTSCHRIFT

(11) **EP 3 439 978 B1**
(45) Veröffentlichungstag und Bekanntmachung des Hinweises auf die Patenterteilung: **28.04.2021**
(21) Anmeldenummer: 17711152.3
(22) Anmeldetag: 16.03.2017
(51) Int. Cl.: B65D 5/06, B65D 5/42

(54) **ZUSCHNITT, PACKUNGSMANTEL, VERPACKUNG UND VERFAHREN ZUR HERSTELLUNG EINES ZUSCHNITTS, EINES PACKUNGSMANTELS UND EINER VERPACKUNG**
BLANK, PACKAGING SHELL, PACKAGING, AND METHOD FOR PRODUCING A CUT, A PACKAGING SHELL, AND A PACKAGING
FLAN, ENVELOPPE D'EMBALLAGE, EMBALLAGE ET PROCÉDÉ DE FABRICATION D'UN FLAN, D'UNE ENVELOPPE D'EMBALLAGE ET D'UN EMBALLAGE

(30) Priorität: 04.04.2016 DE 102016003827
(43) Veröffentlichungstag der Anmeldung: 13.02.2019
(73) Patentinhaber: SIG Technology AG, 8212 Neuhausen am Rheinfall (CH)
(72) Erfinder: DAMMERS, Matthias, 52477 Alsdorf (DE); WIRTZ, Christoph, 52441 Linnich (DE)
(74) Vertreter: Cohausz & Florack
(86) Internationale Anmeldenummer: PCT/EP2017/056201
(87) Internationale Veröffentlichungsnummer: WO 2017/174320

(56) Entgegenhaltungen:
- EP-A1- 0 027 668
- EP-A1- 2 650 222
- EP-A2- 0 176 278
- WO-A1-03/089317

## Beschreibung

Die vorliegende Erfindung betrifft einen Zuschnitt, der als Verbundbestandteile mindestens beinhaltet:
- eine einer ersten Umgebungsseite zugewandte erste Polymerschicht;
- eine auf die Polymeraußenschicht zu einer zweiten Umgebungsseite hin folgende Trägerschicht;
- eine auf die Trägerschicht zu der zweiten Umgebungsseite hin folgende Barriereschicht;
- eine auf die Barriereschicht zu der zweiten Umgebungsseite hin folgende Haftschicht; und
- eine auf die Haftschicht folgende zweite Polymerschicht, die einer zweiten Umgebungsseite zugewandt ist,
- wobei die Schichten, oder wenigstens ein Teil der Schichten, bereichsweise durch wenigstens eine erste und eine zweite, jeweils einen Anfangspunkt und einen Endpunkt aufweisende Rillinie verformt sind,
- wobei jede Rillinie entlang einer ihr zugehörigen imaginären Linie verläuft, die hinsichtlich ihrer jeweiligen Lage und ihres Verlaufs auf dem Zuschnitt der jeweiligen Rillinie entspricht und diese über ihren Anfang und/oder Ihr Ende durch gedachte Fortführung des Verlaufs überragt, und
- wobei die Rillinien Mantel-, Giebel-, und Bodenflächen bildende Bereiche voneinander trennen.

Offenbart wird zudem ein Packungsmantel aus einem Verbundmaterial zur Herstellung einer Verpackung umfassend:
- eine Mantelfläche, und
- eine Längsnaht, die zwei Kanten des Verbundmaterials zu einem umlaufenden Packungsmantel verbindet.

Offenbart wird außerdem eine Verpackung aus einem Verbundmaterial umfassend:
- eine Mantelfläche, und
- eine Längsnaht, die zwei Kanten des Verbundmaterials zu einem umlaufenden Packungsmantel verbindet,
- eine erste Quernaht, die zwei Kanten des Verbundmaterials in einem Bodenbereich verbindet und
- eine zweite Quernaht, die zwei Kanten des Verbundmaterials in einem Giebelbereich verbindet.

Die Offenbarung betrifft ein Verfahren zur Herstellung eines Zuschnitts aus einem Verbundmaterial.

Die Offenbarung betrifft ein Verfahren zur Herstellung eines Packungsmantels aus einem Zuschnitt.

Die Offenbarung betrifft ein Verfahren zur Herstellung einer Verpackung aus einem Packungsmantel.

Verpackungen können auf unterschiedliche Weisen und aus verschiedensten Materialien hergestellt werden. Eine weitverbreitete Möglichkeit ihrer Herstellung besteht darin, aus dem Verpackungsmaterial einen Zuschnitt herzustellen, aus dem durch Falten und weitere Schritte zunächst ein Packungsmantel und schließlich eine Verpackung entsteht. Diese Herstellungsart hat unter anderem den Vorteil, dass die Zuschnitte und Packungsmäntel sehr flach sind und somit platzsparend gestapelt werden können. Auf diese Weise können die Zuschnitte bzw. Packungsmäntel an einem anderen Ort hergestellt werden als die Faltung und Befüllung der Packungsmäntel erfolgt. Als Material werden häufig Verbundstoffe eingesetzt, beispielsweise ein Verbund aus mehreren dünnen Lagen aus Papier, Pappe, Kunststoff oder Metall, insbesondere Aluminium. Derartige Verpackungen finden insbesondere in der Lebensmittelindustrie große Verbreitung.

Zunächst wird das Verpackungsmaterial, welches durch mehrfaches kaschieren einer Papier-, Papp- oder Kartonbahn mit dünnen Lagen aus Kunststoff und/oder Metall als Bahnware erzeugt wird durch Einprägung eines Faltmusters und anschließendes Längs- und Querschneiden zu einem Zuschnitt geformt.

Ein sich meist unmittelbar anschließender Herstellungsschritt besteht dann häufig darin, aus einem Zuschnitt durch Falten und Verschweißen oder Verkleben einer Naht einen umlaufenden Packungsmantel zu erzeugen. Die Faltung des Zuschnitts erfolgt üblicherweise entlang der erwähnten, eingedrückten oder eingeprägten Faltlinien. Die Lage der Faltlinien entspricht dabei der Lage der Kanten der aus dem Packungsmantel herzustellenden Verpackung. Dies hat den Vorteil, dass der Zuschnitt und der Packungsmantel ausschließlich an Stellen gefaltet werden, die bei der fertigen Verpackung ohnehin gefaltet sind. Im Sinne der vorliegenden Schrift wird deshalb unter einem Zuschnitt ein aus einer Bahnware von Verbundmaterial hergestellter in Längs- und Querrichtung fertiggeschnittener und im Umfang definierter Bogen ("flächenförmiger Verbund") verstanden. Ein Packungsmantel ist in Folge aus dem Bogen bzw. flächenförmigen Verbund hergestellt und verkaufsbereit fertiggestellt, wobei ein Packungsmantel als verkaufsfähig fertiggestellt anzusehen ist, wenn er ggf. nach Entnahme aus einer für den Transport von Herstellungsort zu Verwendungsort vorgesehenen Umverpackung ohne Weiteres für die Verarbeitung in einer dafür vorgesehenen Füllmaschine bereit ist. Das bedeutet insbesondere, dass am Packungsmantel keinerlei mechanische Eingriffe mehr nötig sind, um eine reibungslose Verarbeitung des Packungsmantels auf der dafür vorgesehenen Füllmaschine zu gewährleisten. Ein Konditionieren an das Umgebungsklima und/oder ein (zusätzliches) Sterilisieren (z.B. Kantensterilisationsverfahren der Anmelderin) können dagegen optional auch an einem fertigen Packungsmantel beim oder nach dem Transport zu dem vorgesehenen Verwendungsort vorgenommen werden. Beim Umformen und Siegeln entstehende Zwischenschritte bei der Herstellung des Packungsmantels aus einem Zuschnitt können dagegen noch nicht als Packungsmantel bezeichnet werden.

Ein Verfahren zur Herstellung einer Verpackung umfasst dann neben der Bereitstellung eines Packungsmantels der zuvor beschriebenen Art ein Auffalten des Packungsmantels, ein Umformen des Packungsmantels zu einer einseitig geschlossenen Packung, die in diesem Stadium vom Fachmann "Becher" genannt wird, ein Sterilisieren des Innenraums der entstehenden Packung, ein Füllen ein Verschließen, im Allgemeinen durch einen Siegelvorgang, ein abschließendes Formen der Packung durch Anlage von Faltüberständen und ggf. das Applizieren einer Öffnungshilfe ("cap") und/oder Trinkhilfe ("Strohhalm"). Ein beispielhaftes Verfahren zur Herstellung einer Verpackung aus einem Packungsmantel ist in der DE 19 945 500 A1 beschrieben.

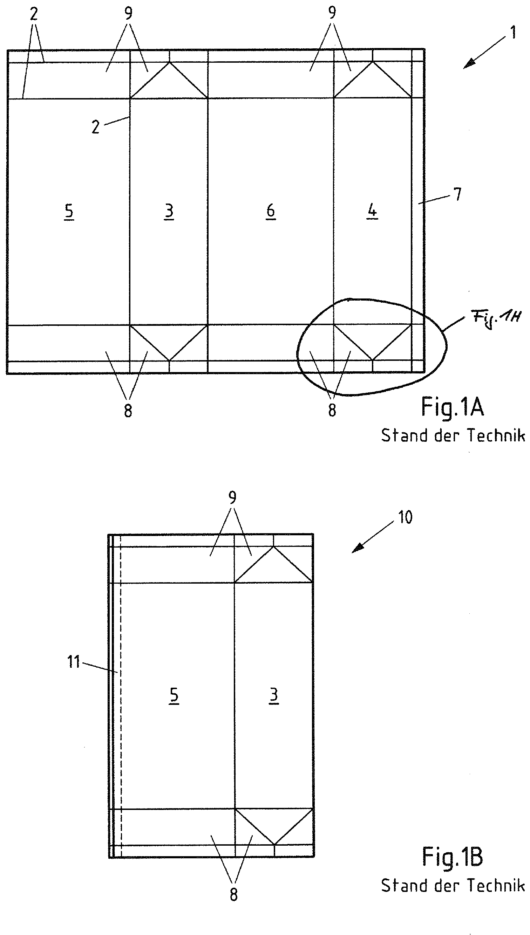

Eine weiteres Verfahren zur Herstellung einer Verpackung aus einem Packungsmantel ist beispielsweise aus der WO 2015/003852 A9 bekannt (dort insbesondere Fig. 1A bis Fig. 1E). Das Verfahren unterscheidet sich beispielsweise zu dem in der offenbarten Verfahren dadurch, dass die den Packungsinnenraum bildende Seite des Packungsmantels vor dem Formen des Bechers (also vor dem Verschließend des Bodens) sterilisiert wird. Die dort beschriebene Verpackung weist eine rechteckige Querschnittsfläche auf und ist insgesamt quaderförmig.

Neben Verpackungen mit viereckigen Querschnittsflächen sind auch Verpackungen mit Querschnittsflächen bekannt, die mehr als vier Ecken aufweisen. Aus der EP 0 936 150 B1 oder der US 6,042,527 sind beispielsweise Verpackungen mit achteckiger Querschnittsfläche bekannt. Die Form der Verpackungen wird dadurch erreicht, dass zusätzliche Faltlinien in den Zuschnitten vorgesehen sind.

Ein Nachteil der Faltung der beschriebenen Packungsmäntel entlang der späteren Verpackungskanten liegt jedoch darin, dass ausschließlich Verpackungen eckigen Querschnittsflächen hergestellt werden können. Zudem können ausschließlich Verpackungen hergestellt werden, deren Querschnittsfläche in vertikaler Richtung der Verpackung identisch ist. Alternative Gestaltungen wie beispielsweise Rundungen oder Freiformen anstelle der Kanten sind hingegen nicht möglich.

Packungsmäntel ("sleeves") und daraus hergestellte Verpackungen ("container") sind auch aus der EP 0 027 350 A1 bekannt. Durch den dort beschriebenen Packungsmantel können Verpackungen hergestellt werden, deren Querschnittsfläche sich in vertikaler Richtung verändert (viereckige Querschnittsflächen am Giebel und am Boden, dazwischen achteckige Querschnittsfläche). Auch diese Verpackung weist jedoch ausschließlich eckige Querschnittsflächen auf. Alternative Gestaltungen wie beispielsweise Rundungen oder Freiformen anstelle der Kanten werden auch in der EP 0 027 350 A1 nicht beschrieben. Der dort beschriebene Packungsmantel besteht zudem nicht aus Verbundmaterial, sondern aus Pappe oder Wellpappe. Für die Befüllung mit Flüssigkeiten wird ein Innenbeutel aus Kunststoff vorgeschlagen, so dass der Packungsmantel selbst nicht zur Herstellung einer flüssigkeitsdichten Verpackung geeignet zu sein braucht.

Packungsmäntel und daraus hergestellte Verpackungen werden auch in der GB 808,223 A beschrieben. Dort wird zunächst eine lange Materialbahn aus Pappe mit Faltlinien versehen und anschließend mit einer Kunststoffschicht beschichtet (Fig. 6). Nach dem Erzeugen einer Längsnaht (Fig. 7) wird die Materialbahn zu einem Schlauch mit einem rechteckigen Querschnitt aufgefaltet (Fig. 8). Die beiden Seitenflächen des Schlauches werden anschließend nach innen gefaltet, wodurch der Schlauch eine flache Form einnimmt (Fig. 9). In bestimmten Abständen werden quer verlaufenden Nähte erzeugt, entlang von denen der Schlauch gefaltet werden kann und somit einen Stapel bildet (Fig. 10). Durch eine Trennung des Schlauches im Bereich der quer verlaufenden Nähte werden einzelne Packungsmäntel erhalten, die bereits einseitig - durch die quer verlaufende Naht - verschlossen sind. Ein Nachteil dieser Vorgehensweise liegt darin, dass die Packungsmäntel bereits bei ihrer Abtrennung von dem Schlauch entlang von sechs Faltlinien gefaltet sind, von denen vier Faltlinien die Kanten der späteren Verpackung bilden. Auch diese Packungsmäntel eignen sich daher nur zur Herstellung von Verpackungen mit rechteckigen Querschnittsflächen. Zudem ist auch die Gestaltungsfreiheit der im Bereich der bereits verschlossenen Quernaht entstehenden Giebel- oder Bodenfläche stark eingeschränkt. Besonders nachteilig sind die hohen Umformkräfte, die zum Aufklappen und Umformen des Packungsmantels ("Sleeve") zu einer einseitig offenen Packung erforderlich sind (dieser Zwischenzustand wird auch als "Becher" bezeichnet). Die hohen Umformkräfte führen zu einer erheblichen Belastung der bereits versiegelten Nähte, so dass eine Flüssigkeits- und/oder Gasdichtigkeit nicht mehr mit ausreichender Sicherheit gegeben ist.

Ein weiterer Packungsmantel und eine daraus hergestellte Verpackung werden in der WO 97/32787 A2 beschrieben. Auch bei diesem Packungsmantel sind jedoch im Bereich der Mantelfläche zahlreiche Faltlinien vorgesehen, von denen einige die späteren Kanten der daraus hergestellten Verpackung bilden. Auch diese Packungsmäntel eignen sich daher nur für die Herstellung von Verpackungen mit eckigen Querschnittsflächen. Ein weiterer Nachteil liegt darin, dass der Packungsmantel nicht nur im Bereich der Rückseite durch eine Längsnaht verschlossen ist, sondern auch im Bereich des Bodens durch eine Quernaht bereits verschlossen ist. Dies führt zu einer beschränkten Gestaltungsfreiheit des Bodens. Besonders nachteilig sind auch hier die hohen Umformkräfte, die zum Aufklappen und Umformen des Packungsmantels ("Sleeve") zu einer einseitig offenen Packung erforderlich sind. Die hohen Umformkräfte führen zu einer erheblichen Belastung der bereits versiegelten Nähte, so dass eine Flüssigkeits- und/oder Gasdichtigkeit nicht mehr mit ausreichender Sicherheit gegeben ist. Nachteilig ist zudem die Einschränkung, dass nur eine Bodenvariante (unter den Boden geklappte Ohren) möglich ist, während eine andere Bodenvariante (nach innen gerichtete Ohren oberhalb des Bodens) ausscheidet.

Die EP 0 176 278 A2 offenbart einen mit Faltlinien versehenen Zuschnitt zur Herstellung eines Kartonbehälters.

Die WO 03/089 317 A1 offenbart eine Verpackung zur Lagerung von Flüssigkeit und eine Verpackungsstruktur davon.

Offenbart wird ein Zuschnitt, der als Verbundbestandteile mindestens beinhaltet:
- eine einer ersten Umgebungsseite zugewandte erste Polymerschicht;
- eine auf die Polymeraußenschicht zu einer zweiten Umgebungsseite hin folgende Trägerschicht;
- eine auf die Trägerschicht zu der zweiten Umgebungsseite hin folgende Barriereschicht;
- eine auf die Barriereschicht zu der zweiten Umgebungsseite hin folgende Haftschicht; und
- eine auf die Haftschicht folgende zweite Polymerschicht, die einer zweiten Umgebungsseite zugewandt ist,
- wobei die Schichten, oder wenigstens ein Teil der Schichten, bereichsweise durch wenigstens eine erste und eine zweite, jeweils einen Anfangspunkt und einen Endpunkt aufweisende Rillinie verformt sind,
- wobei jede Rillinie entlang einer ihr zugehörigen imaginären Linie verläuft, die hinsichtlich ihrer jeweiligen Lage und ihres Verlaufs auf dem Zuschnitt der jeweiligen Rillinie entspricht und diese über ihren Anfang und/oder Ihr Ende durch gedachte Fortführung des Verlaufs überragt, und
- wobei die Rillinien Mantel-, Giebel-, und Bodenflächen bildende Bereiche voneinander trennen,
dadurch gekennzeichnet, dass
der Zuschnitt wenigstens einen Schnittpunkt von imaginären Linien umfasst und wenigstens im Mantelflächen bildenden Bereich und/oder im Giebelflächen bildenden Bereich und/oder im Bodenflächen bildenden Bereich oder völlig frei von einem Schnittpunkt der Rillinien ist.

Ein Schnittpunkt umfasst im Sinne dieser Anmeldung auch einen Berührpunkt.

Dies hat den Vorteil, dass der Zuschnitt bei der Herstellung eines aus ihm geformten Packungsmantels entlang der Rillinien gut und insbesondere in den sich im Umgebungsbereich der Schnittpunkte bildenden Materialkonzentrationen spannungsarm umformbar ist.

Die durch die Rillinien im Zuschnitt entstandene Verformung erfolgt dabei insbesondere durch Materialverdrängung.

Vorzugsweise sind die Anfangs- und/oder Endpunkte der Rillinien dabei zwischen 0,1 mm und 10,0 mm, vorzugsweise zwischen 0,4 mm und 6,5 mm, ganz vorzugsweise zwischen 0,5 mm und 3,8 mm von einem aus den, den Rillinien zugehörigen, imaginären Linien gebildeten Schnittpunkt entfernt.

So läßt sich beim Falten des Zuschnitts während der Herstellung des aus ihm entstehenden Packungsmantels, bzw. beim späteren Falten des fertigen Packungsmantels zur Herstellung einer aus ihm entstehenden Packung besonders sicher ein Aufplatzen bzw. ein Delaminieren des Verbundes in den zu faltenden Bereichen verhindern ohne ein hohes Risiko von Fehlfaltungen in Kauf nehmen zu müssen.

Offenbart wird ferner ein Zuschnitt, der als Verbundbestandteile mindestens beinhaltet:
- eine einer ersten Umgebungsseite zugewandte erste Polymerschicht;
- eine auf die Polymeraußenschicht zu einer zweiten Umgebungsseite hin folgende Trägerschicht;
- eine auf die Trägerschicht zu der zweiten Umgebungsseite hin folgende Barriereschicht;
- eine auf die Barriereschicht zu der zweiten Umgebungsseite hin folgende Haftschicht;
- eine auf die Haftschicht folgende zweite Polymerschicht, die einer zweiten Umgebungsseite zugewandt ist
- wobei die Schichten, oder wenigstens ein Teil der Schichten, bereichsweise durch wenigstens eine erste und eine zweite, jeweils einen Anfangspunkt und einen Endpunkt aufweisende Rillinie durch Materialverdrängung verformt sind,
- wobei jede Rillinie entlang einer ihr zugehörigen imaginären Linie verläuft, die hinsichtlich ihrer jeweiligen Lage und ihres Verlaufs auf dem Zuschnitt der jeweiligen Rillinie entspricht und diese über ihren Anfang und/oder Ihr Ende durch gedachte Fortführung des Verlaufs überragt,
dadurch gekennzeichnet, dass
der Zuschnitt wenigstens eine Rillinie umfasst, die eine Materialverdrängung in Richtung von der ersten Umgebungsseite hin zu der zweiten Umgebungsseite realisiert hat und wenigstens eine Rillinie umfasst, die eine Materialverdrängung in Richtung von der zweiten Umgebungsseite hin zur ersten Umgebungsseite realisiert hat.

Dies hat den Vorteil, die Richtung der Materialverdrängung der späteren Faltrichtung angepasst werden kann. Auch so läßt sich beim Falten des Zuschnitts während der Herstellung des aus ihm entstehenden Packungsmantels, bzw. beim späteren Falten des fertigen Packungsmantels zur Herstellung einer aus ihm entstehenden Packung besonders sicher ein Aufplatzen bzw. ein Delaminieren des Verbundes in den zu faltenden Bereichen verhindern ohne ein hohes Risiko von Fehlfaltungen in Kauf nehmen zu müssen.

Mit Vorteil ist dieser Zuschnitt mit Merkmalen des zuvor beschriebenen Zuschnitts, der wenigstens einen Schnittpunkt von imaginären Linien umfasst und frei von einem Schnittpunkt der Rillinien ist und/oder dessen Ausgestaltungen kombiniert.

Auf diese Weise läßt sich ein Aufplatzen bzw. ein Delaminieren des Verbundes in den zu faltenden Bereichen besonders sicher verhindern.

Es ist weiter von Vorteil, wenn einer der zuvor genannten Zuschnitte Rillinien mit einer Breite im Bereich zwischen 0,7 mm und 3,2 mm, insbesondere zwischen 1,0 mm und 2,5 mm und ganz insbesondere zwischen 1,2 mm und 2,2 mm aufweist.

Bei derartigen Breiten der Rillinien werden am wenigsten Fasern des Kartonbasierten Verbundes zerstört.

Hierbei ist es von besonderem Vorteil, wenn wenigstens die, eine gleiche Richtung aufweisenden Rillinien auf dem Zuschnitt, wenigstens in etwa, die gleiche Breite aufweisen. Von ganz besonderem Vorteil ist es zudem, wenn auch gegebenenfalls vorhandene Scheinrillinien die gleiche Breite wie die Rillinien aufweisen. Ebenso ist es von ganz besonderem Vorteil wenn auch gegebenenfalls vorhandene Hilfstrillinien die gleiche Breite aufweisen.

Auf diese Weise kann eine Breite gewählt werden, die exakt auf die Materialeigenschaften des Laminats bzw. des Verbundaufbaus abgestimmt ist.

Aus demselben Grund kann es auch vorteilhaft sein, wenn alle Rillinien, unabhängig davon ob sie in Längs- Diagonal, oder Querrichtung verlaufen, oder es sich um Freiform-Rillinien handelt, die gleiche Breite aufweisen.

Dagegen kann es in anderen Fällen vorteilhaft sein, wenn eine Gruppe von Linien, abhängig von Ihrer Ausrichtung oder Ihrer Gattung, eine unterschiedliche Breite zu anderen Linien aufweisen.

Dadurch können die Linien ihren unterschiedlichen Aufgaben besser gerecht werden. Die Breiten können sich dann beispielsweise um 0,1 mm bis 0,5 mm unterscheiden.

Der zuvor genannte Zuschnitt weist Rillinien mit einer Eindringtiefe im Bereich zwischen 20 % und 60 % auf.

Bei derartigen Eindringtiefen der Rillinien werden am wenigsten Fasern des Kartonbasierten Verbundes zerstört.

Hierbei ist es von besonderem Vorteil, wenn wenigstens die, eine gleiche Richtung aufweisenden Rillinien auf dem Zuschnitt, wenigstens in etwa, die gleiche Eindringtiefe aufweisen. Von ganz besonderem Vorteil ist es zudem, wenn auch gegebenenfalls vorhandene Scheinrillinien die gleiche Eindringtiefe wie die Rillinien aufweisen. Ebenso ist es von ganz besonderem wenn auch gegebenenfalls vorhandene Hilfstrillinien die gleiche Eindringtiefe aufweisen.

Auf diese Weise kann eine Eindringtiefe gewählt werden, die exakt auf die Materialeigenschaften des Laminats bzw. des Verbundaufbaus abgestimmt ist.

Aus demselben Grund kann es auch vorteilhaft sein, wenn alle Rillinien, unabhängig davon ob sie in Längs- Diagonal, oder Querrichtung verlaufen, oder es sich um Freiform-Rillinien handelt, die gleiche Eindringtiefe aufweisen.

Dagegen kann es in anderen Fällen vorteilhaft sein, wenn eine Gruppe von Linien, abhängig von Ihrer Ausrichtung oder Ihrer Gattung, eine unterschiedliche Eindringtiefe zu anderen Linien aufweisen.

Dadurch können die Linien ihren unterschiedlichen Aufgaben besser gerecht werden.

Die Eindringtiefen können sich dann beispielsweise um 5 % bis 25 % der Gesamtstärke des Verbundmaterials bzw. Verbunds unterscheiden.

Es ist von Vorteil, wenn die Eindringtiefe wenigstens einer Linie in ihren, an Ihrem Anfangs- und/oder Endpunkt angrenzenden, Bereichen bis 10,0 mm, vorzugsweise bis 4,8 mm, ganz vorzugswiese bis 3,8 mm abschnittsweise um wenigstens 15%, insbesondere um wenigstens 30%, ganz insbesondere um wenigstens 50% reduziert ist.

Dies verhindert innere Kerbwirkungen im Verbund. Gleichzeitig wird die Faltung jedoch noch ausreichend weit geführt.

Es ist von Vorteil, wenn der Zuschnitt wenigstens einen Schnittpunkt mit 2 bis 8 beteiligten imaginären Linien aufweist.

Dies ermöglicht eine große Variabilität der Gestaltung der aus dem Zuschnitt formbaren Packungsmäntel und der aus den Packungsmänteln formbaren Verpackungen.

Dabei ist es von Vorteil, wenn wenigstens eine der beteiligten Linien eine Rillinie ist.

Weiter ist es von Vorteil, wenn wenigstens eine der beteiligten Linien eine Scheinrillinie ist.

Weiter ist es von Vorteil, wenn wenigstens eine der beteiligten Linien eine Hilfslinie ist.

Die Erfindung betrifft weiterhin einen aus einem der Zuschnitte erzeugten Packungsmantel.

Die Erfindung betrifft weiterhin eine aus einem solchen Packungsmantel erzeugte Verpackung.

Die Offenbarung bezieht sich ebenfalls auf entsprechende Herstellungsverfahren.

Die Erfindung wird nachfolgend anhand einer lediglich ein bevorzugtes Ausführungsbeispiel darstellenden Zeichnung näher erläutert. In der Zeichnung zeigen:
- Fig. 1A:: einen aus dem Stand der Technik bekannten Zuschnitt zum Falten eines Packungsmantels,
- Fig. 1B:: einen aus dem Stand der Technik bekannten Packungsmantel, der aus dem in Fig. 1A gezeigten Zuschnitt gebildet ist, im flach gefalteten Zustand,

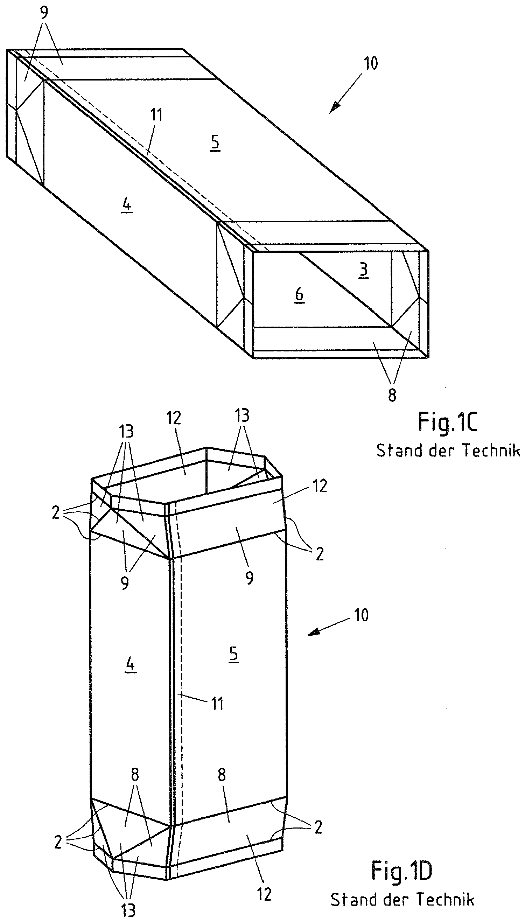

- Fig. 1C:: den Packungsmantel aus Fig. 1B im aufgefalteten Zustand,
- Fig. 1D:: den Packungsmantel aus Fig. 1C mit vorgefalteten Boden- und Giebelflächen,

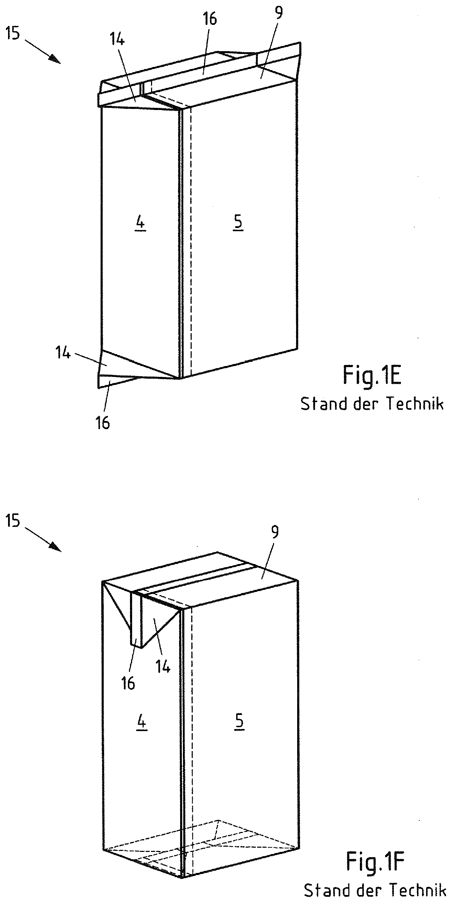

- Fig. 1E:: eine aus dem Stand der Technik bekannte Verpackung, die aus dem in Fig. 1A gezeigten Zuschnitt gebildet ist, nach dem Verschweißen,
- Fig. 1F:: die Verpackung aus Fig. 1E mit angelegten Ohren,

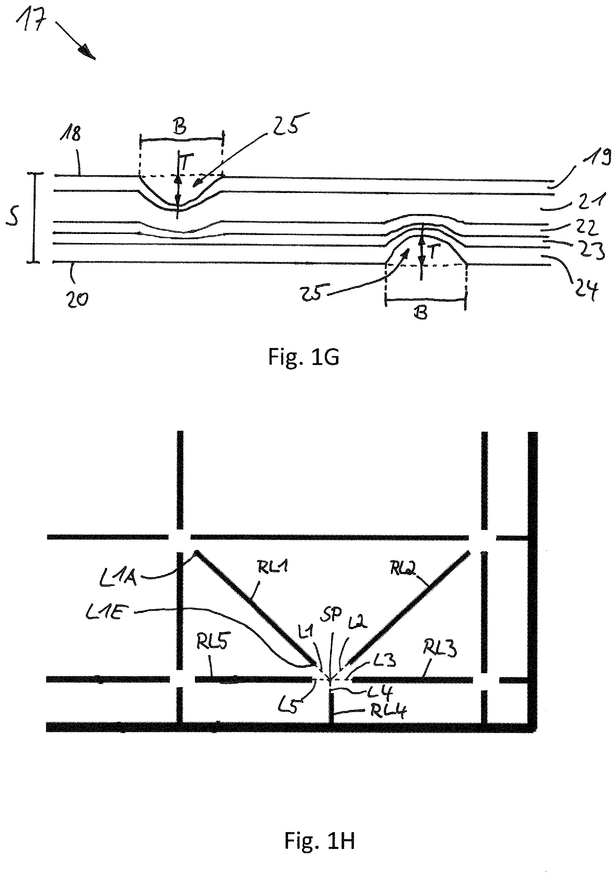

- Fig. 1G:: zeigt ein Verbundmaterial 17 als Basis eines Zuschnittes 1 im Querschnitt, und
- Fig. 1H:: den in Fig. 1A eingekreisten Bereich des Zuschnitts 1 in vergrößerter Ansicht.

In Fig. 1A ist ein aus dem Stand der Technik bekannter Zuschnitt 1 dargestellt, aus dem ein Packungsmantel gebildet werden kann. Der Zuschnitt 1 kann, wie in Figuren 1G und 1H gezeigt, mehrere Lagen unterschiedlicher Materialien umfassen, beispielsweise Papier, Pappe, Kunststoff oder Metall, insbesondere Aluminium. Der Zuschnitt 1 weist mehrere Faltlinien 2 auf, die das Falten des Zuschnitts 1 erleichtern sollen und den Zuschnitt 1 in mehrere Flächen aufteilen. Der Zuschnitt 1 kann in eine erste Seitenfläche 3, eine zweite Seitenfläche 4, eine vordere Fläche 5, eine hintere Fläche 6, eine Siegelfläche 7, Bodenflächen 8 und Giebelflächen 9 unterteilt werden. Aus dem Zuschnitt 1 kann ein Packungsmantel gebildet werden, indem der Zuschnitt 1 derart gefaltet wird, dass die Siegelfläche 7 mit der vorderen Fläche 5 verbunden, insbesondere verschweißt werden kann.

Fig. 1B zeigt einen aus dem Stand der Technik bekannten Packungsmantel 10 im flach gefalteten Zustand. Die bereits im Zusammenhang mit Fig. 1A beschriebenen Bereiche des Packungsmantels sind in Fig. 1B mit entsprechenden Bezugszeichen versehen. Der Packungsmantel 10 ist aus dem in Fig. 1A gezeigten Zuschnitt 1 gebildet. Hierzu wurde der Zuschnitt 1 derart gefaltet, dass die Siegelfläche 7 und die vordere Fläche 5 überlappend angeordnet sind, so dass die beiden Flächen miteinander flächig verschweißt werden können. Als Ergebnis entsteht eine Längsnaht 11. In Fig. 1B ist der Packungsmantel 10 in einem flach zusammengefalteten Zustand dargestellt. In diesem Zustand liegt eine Seitenfläche 4 (in Fig. 1B verdeckt) unter der vorderen Fläche 5 während die andere Seitenfläche 3 auf der hinteren Fläche 6 (in Fig. 1B verdeckt) liegt. In dem flach zusammengefalteten Zustand können mehrere Packungsmäntel 10 besonders platzsparend gestapelt werden. Daher werden die Packungsmäntel 10 häufig an dem Ort der Herstellung gestapelt und stapelweise zu dem Ort der Befüllung transportiert. Erst dort werden die Packungsmäntel 10 meist bereits innerhalb einer Füllmaschine abgestapelt und aufgefaltet, um mit Inhalten, beispielsweise mit Nahrungsmitteln, befüllt werden zu können. Die Befüllung kann unter aseptischen Bedingungen erfolgen.

In Fig. 1C ist der Packungsmantel 10 aus Fig. 1B im aufgefalteten Zustand dargestellt. Auch hier sind die bereits im Zusammenhang mit Fig. 1A oder Fig. 1B beschriebenen Bereiche des Packungsmantels 10 mit entsprechenden Bezugszeichen versehen. Unter dem aufgefalteten Zustand wird eine Konfiguration verstanden, bei der sich zwischen den beiden jeweils benachbarten Flächen 3, 4, 5, 6 ein Winkel von etwa 90° ausbildet, so dass der Packungsmantel 10 - je nach der Form dieser Flächen - einen quadratischen oder rechteckigen Querschnitt aufweist. Dem entsprechend sind die gegenüberliegenden Seitenflächen 3, 4 parallel zueinander angeordnet. Das Gleiche gilt für die vordere Fläche 5 und die hintere Fläche 6.

Fig. 1D zeigt den Packungsmantel 10 aus Fig. 1C im vorgefalteten Zustand, also in einem Zustand, in dem die Faltlinien 2 sowohl im Bereich der Bodenflächen 8 als auch im Bereich der Giebelflächen 9 vorgefaltet worden sind. Diejenigen Bereiche der Bodenflächen 8 und der Giebelflächen 9, die an die vordere Fläche 5 und an die hintere Fläche 6 angrenzen, werden auch als Rechtecksflächen 12 bezeichnet. Die Rechtecksflächen 12 werden bei der Vorfaltung nach innen gefaltet und bilden später den Boden bzw. den Giebel der Verpackung. Diejenigen Bereiche der Bodenflächen 8 und der Giebelflächen 9, die an die Seitenflächen 3, 4 angrenzen, werden hingegen als Dreiecksflächen 13 bezeichnet. Die Dreiecksflächen 13 werden bei der Vorfaltung nach außen gefaltet und bilden abstehende Bereiche aus überschüssigem Material, die auch als "Ohren" 14 bezeichnet werden und in einem späteren Herstellungsschritt - etwa durch Klebverfahren - an die Verpackung angelegt werden.

In Fig. 1E ist eine aus dem Stand der Technik bekannte Verpackung 15, die aus dem in Fig. 1A gezeigten Zuschnitt gebildet ist, gezeigt. Die Verpackung 15 ist nach dem Verschweißen, also im befüllten und verschlossenen Zustand gezeigt. Im Bereich der Bodenflächen 8 und im Bereich der Giebelflächen 9 entsteht nach dem Verschließen eine Flossennaht 16. In Fig. 1E stehen die Ohren 14 und die Flossennaht 16 ab. Sowohl die Ohren 14 als auch die Flossennaht 16 werden in einem späteren Herstellungsschritt, etwa durch Schweißverfahren - insbesondere umfassend ein Aktivieren und ein Verpressen - angelegt.

Fig. 1F zeigt die Verpackung 15 aus Fig. 1E mit angelegten Ohren 14. Zudem sind auch die Flossennähte 16 an die Verpackung 15 angelegt. Die oberen, im Bereich der Giebelfläche 9 angeordneten Ohren 14 sind nach unten umgeklappt und flach an die beiden Seitenflächen 3, 4 angelegt. Vorzugsweise sind die oberen Ohren 14 mit den beiden Seitenflächen 3, 4 verklebt oder verschweißt. Die unteren, im Bereich der Bodenfläche 8 angeordneten Ohren 14 sind ebenfalls nach unten umgeklappt, jedoch flach an die Unterseite der Verpackung 15 angelegt, die durch zwei Rechtecksflächen 12 der Bodenfläche 8 gebildet wird. Vorzugsweise sind auch die unteren Ohren 14 mit der Verpackung 15 - insbesondere mit den Rechtecksflächen 12 - verklebt oder verschweißt.

Fig. 1G zeigt ein Verbundmaterial 17 als Basis eines Zuschnittes 1 im Querschnitt. Das Verbundmaterial 17 umfasst als Verbundbestandteile mindestens eine einer ersten Umgebungsseite 18 zugewandte erste Polymerschicht 19 eine auf die Polymeraußenschicht zu einer zweiten Umgebungsseite 20 hin folgende Trägerschicht 21 eine auf die Trägerschicht 21zu der zweiten Umgebungsseite 20 hin folgende Barriereschicht 22, eine auf die Barriereschicht 22 zu der zweiten Umgebungsseite 20 hin folgende Haftschicht 23, eine auf die Haftschicht 23 folgende zweite Polymerschicht 24, die der zweiten Umgebungsseite 20 zugewandt ist. Dabei ist die Trägerschicht 21 aus einem Faserstoff, insbesondere aus einer Kartonschicht gebildet und weist ein Flächengewicht zwischen 120g/m² und 400 g/m² auf. Die Barriereschicht 22 kann aus einer dünnen Metallfolie, insbesondere einer Aluminiumfolie, gebildet sein. Das Verbundmaterial 17 kann alternativ jedoch auch frei von Metall, insbesondere Aluminium, ausgebildet sein.

Ein Teil der Schichten 19, 21, 22, 23, 24 ist bereichsweise durch wenigstens eine erste und eine zweite Rillinie 25 verformt. Die Gesamtstärke S des Verbundmaterials 17 kann vorzugsweise zwischen 0,15 mm und 1,0 mm, besonders vorzugsweise zwischen 0,2 mm und 0,6 mm betragen und ist im Wesentlichen davon abhängig sein, welches Volumen eine aus einem aus dem Zuschnitt gebildeten Packungsmantel geformte Verpackung beinhalten soll. Übliche Volumen verkaufsfertiger Verpackungen vorzugsweise aseptisch abgefüllter Lebensmittel, insbesondere Getränke, liegen heute zwischen 50ml und 4000ml. Je größer des Volumen, desto stärker muss das Verbundmaterial 17 ausgebildet sein. Die Tiefe T der Rilllinie 25 folgt (in ihrem tiefsten Punkt gemessen) dann der durch die Prägung bzw. Materialverdrängung entstandenen Einwölbung und beträgt etwa 10 % bis 120 %, besonders vorzugsweise zwischen 20 % und 60 % der Gesamtstärke S des Verbundmaterials 17.

Fig. 1H zeigt den in Fig. 1A eingekreisten Bereich des Zuschnitts 1 in vergrößerter Ansicht. Dabei ist zu erkennen, dass die erste Rilllinie RL1 und die zweite Rillinie RL2 sowie die weiteren dargestellten Rillinien RL3, RL4, RL5 jeweils entlang einer ihr zugehörigen imaginären Linie L1, L2, L3, L4, L5 verlaufen, die hinsichtlich ihrer jeweiligen Lage und ihres Verlaufs auf dem Zuschnitt der jeweiligen Rillinie entspricht und diese über ihren Anfang und/oder Ihr Ende durch gedachte Fortführung des Verlaufs überragen. Ein Anfangspunkt L1A und einen Endpunkt L1E sind beispielhaft im Zusammenhang mit der Linie L1 in der Figur bezeichnet.

Der in Fig. 1H näher betrachtete Schnittpunkt SP des Zuschnitts 1 von imaginären Linien L1, L2, L3, L4, L5 ist dabei frei von einem Schnittpunkt der jeweils auf den beteiligten imaginären Linien L1, L2, L3, L4, L5 wenigstens abschnittsweise liegenden Rillinien RL1, RL2, RL3, RL4, RL5. Im dargestellten Fall beträgt der Abstand der Endbereiche der Rillinien RL1, RL2, RL3, RL4, RL5 zwischen 0,4 mm und 4,5 mm vom Schnittpunkt SP der imaginären Linien L1, L2, L3, L4, L5.

### Bezugszeichenliste:

- 1:: Zuschnitt
- 2:: Faltlinie
- 3, 4:: Seitenfläche
- 5:: vordere Fläche
- 6:: hintere Fläche
- 7:: Siegelfläche
- 8:: Bodenfläche
- 9:: Giebelfläche
- 10:: Packungsmantel
- 11:: Längsnaht
- 12:: Rechtecksfläche
- 13:: Dreiecksfläche
- 14:: Ohr
- 15:: Verpackung
- 16:: Flossennaht
- 17:: Verbundmaterial
- 18:: erste Umgebungsseite
- 19:: erste Polymerschicht
- 20:: zweite Umgebungsseite
- 21:: Trägerschicht
- 22:: Barriereschicht
- 23:: Haftschicht
- 24:: zweite Polymerschicht
- 25:: Rilllinie

- B:: Breite (der Rilllinie 25)
- L1-L5:: Linie
- L1A:: Anfangspunkt
- L1E:: Endpunkt
- RL1-RL5:: Rilllinie
- S:: Gesamtstärke (des Verbundmaterials 17)
- SP:: Schnittpunkt
- T:: Tiefe (der Rilllinie 25)

## Patentansprüche

1. Zuschnitt (1), der als Verbundbestandteile mindestens beinhaltet:
- eine einer ersten Umgebungsseite (18) zugewandte erste Polymerschicht (19);
- eine auf die Polymeraußenschicht zu einer zweiten Umgebungsseite (20) hin folgende Trägerschicht (21); und
- eine auf die Trägerschicht (21) zu der zweiten Umgebungsseite (20) hin folgende Barriereschicht (22);
- wobei die Schichten, oder wenigstens ein Teil der Schichten, bereichsweise durch wenigstens eine erste und eine zweite, jeweils einen Anfangspunkt (L1A) und einen Endpunkt (L1E) aufweisende Rillinie (RL1, RL2, RL3, RL4, RL5) verformt sind,
- wobei jede Rillinie (RL1, RL2, RL3, RL4, RL5) entlang einer ihr zugehörigen imaginären Linie (L1, L2, L3, L4, L5) verläuft, die hinsichtlich ihrer jeweiligen Lage und ihres Verlaufs auf dem Zuschnitt (l)der jeweiligen Rillinie (RL1, RL2, RL3, RL4, RL5) entspricht und diese über ihren Anfang und/oder Ihr Ende durch gedachte Fortführung des Verlaufs überragt, und
- wobei die Rillinien Mantel-, Giebel- (9), und Bodenflächen (8) bildende Bereiche voneinander trennen,
**dadurch gekennzeichnet, dass**
der Zuschnitt (1) wenigstens einen Schnittpunkt (SP) von imaginären Linien (L1, L2, L3, L4, L5) umfasst und wenigstens im Mantelflächen bildenden Bereich und im Giebelflächen (9) bildenden Bereich und im Bodenflächen (8) bildenden Bereich oder völlig frei von einem Schnittpunkt (SP) der Rillinien (RL1, RL2, RL3, RL4, RL5) ist und dass der Zuschnitt (1) als Verbundbestandteile eine auf die Barriereschicht (22) zu der zweiten Umgebungsseite (20) hin folgende Haftschicht (23) und eine auf die Haftschicht (23) folgende zweite Polymerschicht (24), die einer zweiten Umgebungsseite (20) zugewandt ist, beinhaltet.

2. Zuschnitt (1), der als Verbundbestandteile mindestens beinhaltet:
- eine einer ersten Umgebungsseite (18) zugewandte erste Polymerschicht (19);
- eine auf die Polymeraußenschicht zu einer zweiten Umgebungsseite (20) hin folgende Trägerschicht (21); und
- eine auf die Trägerschicht (21) zu der zweiten Umgebungsseite (20) hin folgende Barriereschicht (22);
- wobei die Schichten, oder wenigstens ein Teil der Schichten, bereichsweise durch wenigstens eine erste und eine zweite, jeweils einen Anfangspunkt (L1A) und einen Endpunkt (L1E) aufweisende Rillinie (RL1, RL2, RL3, RL4, RL5) durch Materialverdrängung verformt sind,
- wobei jede Rillinie (RL1, RL2, RL3, RL4, RL5)entlang einer ihr zugehörigen imaginären Linie (L1, L2, L3, L4, L5) verläuft, die hinsichtlich ihrer jeweiligen Lage und ihres Verlaufs auf dem Zuschnitt (1) der jeweiligen Rillinie (RL1, RL2, RL3, RL4, RL5) entspricht und diese über ihren Anfang und/oder Ihr Ende durch gedachte Fortführung des Verlaufs überragt,
**dadurch gekennzeichnet, dass**
der Zuschnitt (1) wenigstens eine Rillinie (25) umfasst, die eine Materialverdrängung in Richtung von der ersten Umgebungsseite (18) hin zu der zweiten Umgebungsseite (20) realisiert hat und wenigstens eine Rillinie (25) umfasst, die eine Materialverdrängung in Richtung von der zweiten Umgebungsseite (20) hin zur ersten Umgebungsseite (18) realisiert hat und sich die Gesamtstärke (S) des Verbundmaterials (17) im Bereich der Rillinien (25) durch die Materialverdrängung um eine Tiefe (T) zwischen 20 % und 60 % verringert und dass der Zuschnitt (1) als Verbundbestandteile eine auf die Barriereschicht (22) zu der zweiten Umgebungsseite (20) hin folgende Haftschicht (23) und eine auf die Haftschicht (23) folgende zweite Polymerschicht (24), die einer zweiten Umgebungsseite (20) zugewandt ist, beinhaltet.

3. Packungsmantel (10),
**dadurch gekennzeichnet, dass**
der Packungsmantel (10) aus einem Zuschnitt (1) nach Anspruch 1 oder Anspruch 2 hergestellt ist.

4. Verpackung (15),
**dadurch gekennzeichnet, dass**
die Verpackung (15) aus einem Packungsmantel (10) nach Anspruch 3 hergestellt ist.

## Claims

1. Sleeve blank (1) which contains as composite components at least:
- a first polymer layer (19) facing a first outer side (18);
- a support layer (21) following on the outer polymer layer in the direction of a second outer side (20); and
- a barrier layer (22) following on the support layer (21) in the direction of the second outer side (20);
- wherein the layers, or at least a part of the layers, are deformed in certain regions through at least one first and one second crease line (RL1, RL2, RL3, RL4, RL5), in each case possessing a starting point (L1A) and an end point (LIE),
- wherein each crease line (RL1, RL2, RL3, RL4, RL5) runs along an imaginary line (L1, L2, L3, L4, L5) associated therewith which, in terms of its respective location and its course on the sleeve blank (1), corresponds to the respective crease line (RL1, RL2, RL3, RL4, RL5), and projects beyond its beginning and/or its end through imaginary continuation of said course, and
- wherein the crease lines separate regions forming sleeve, gable (9), and base surfaces (8) from one another,
**characterised in that** the sleeve blank (1) comprises at least one intersection point (SP) of imaginary lines (L1, L2, L3, L4, L5) and is at least in the region forming the sleeve surfaces and in the gable surfaces (9) and in the region forming the base surfaces (8) or completely free of an intersection point (SP) of the crease lines (RL1, RL2, RL3, RL4, RL5) and **in that** the sleeve blank (1) comprises, as composite components, an adhesive layer (23) following on the barrier layer (22) in the direction of the second outer side (20) and a second polymer layer (24) following on the adhesive layer (23), which is facing a second outer side (20).

2. Sleeve blank (1) which contains as composite components at least:
- a first polymer layer (19) facing a first outer side (18);
- a support layer (21) following on the outer polymer layer in the direction of a second outer side (20); and
- a barrier layer (22) following on the support layer (21) in the direction of the second outer side (20);
- wherein the layers, or at least a part of the layers, are deformed by material displacement in certain regions through at least one first and one second crease line (RL1, RL2, RL3, RL4, RL5), in each case possessing a starting point (L1A) and an end point (LIE),
- wherein each crease line (RL1, RL2, RL3, RL4, RL5) runs along an imaginary line (L1, L2, L3, L4, L5) associated therewith which, in terms of its respective location and its course on the sleeve blank (1), corresponds to the respective crease line (RL1, RL2, RL3, RL4, RL5), and projects beyond its beginning and/or its end through imaginary continuation of said course,
**characterised in that** the sleeve blank (1) comprises at least one crease line (25), which has realised a material displacement in the direction from the first outer side (18) to the second outer side (20) and comprises at least one crease line (25), which has realised a material displacement in the direction from the second outer side (20) to the first outer side (18) and **in that** the total thickness (S) of the composite material (17) in the region of the crease lines (25) is reduced by a depth (T) between 20% and 60% by the material displacement and **in that** the sleeve blank (1) as composite components contains an adhesive layer (23) following on the barrier layer (22) in the direction of the second outer side (20) and a second polymer layer (24) following on the adhesive layer (23), which is facing a second outer side (20).

3. Package sleeve (10), **characterised in that** the package sleeve (10) is manufactured from a sleeve blank (1) according to claim 1 or claim 2.

4. Packaging (15), **characterised in that** the packaging (15) is manufactured from a package sleeve (10) according to claim 3.

## Revendications

1. Flan (1) qui contient comme éléments constitutifs au moins :
- une première couche de polymère (19) faisant face au premier côté environnement (18) ;
- une couche de support (21) faisant suite à la couche de polymère extérieure en direction d'un second côté environnement (20) ; et
- une couche de barrière (22) faisant suite à la couche de support (21) en direction du second côté environnement (20) ;
- les couches, ou au moins une partie des couches, étant déformées par endroits par au moins une première et une deuxième ligne de rainurage (RL1, RL2, RL3, RL4, RL5) comportant chacune un point initial (L1A) et un point final (L1E),
- chaque ligne de rainurage (RL1, RL2, RL3, RL4, RL5) s'étendant le long d'une ligne imaginaire (L1, L2, L3, L4, L5) qui lui est associée et qui correspond, quant à sa position respective et à son allure sur le flan (1), à la ligne de rainurage (RL1, RL2, RL3, RL4, RL5) respective et celle-ci faisant saillie de son début et/ou sa fin par une poursuite imaginaire de l'allure, et
- les lignes de rainurage séparant l'une de l'autre des zones formant des surfaces d'enveloppe, de pignon (9) et de fond (8),
**caractérisé par le fait que** le flan (1) comprend au moins un point d'intersection (SP) des lignes imaginaires (L1, L2, L3, L4, L5) et est dépourvu d'un point d'intersection (SP) des lignes de rainurage (RL1, RL2, RL3, RL4, RL5) entièrement ou au moins dans la zone formant des surfaces d'enveloppe et/ou la zone formant des surfaces de pignon (9) et/ou la zone formant des surface de fond (8) et en ce que le flan (1) contient comme éléments constitutifs une couche adhésive (23) faisant suite à la couche de barrière (22) en direction d'un second côté environnement (20) et une seconde couche de polymère (24) faisant suite à la couche adhésive (23) qui fait face à un second côté environnement (20).

2. Flan (1) qui contient comme éléments constitutifs au moins :
- une première couche de polymère (19) faisant face au premier côté environnement (18) ;
- une couche de support (21) faisant suite à la couche de polymère extérieure en direction d'un second côté environnement (20) ; et
- une couche de barrière (22) faisant suite à la couche de support (21) en direction du second côté environnement (20) ;
- les couches, ou au moins une partie des couches, étant déformées par endroits par au moins une première et une deuxième ligne de rainurage (RL1, RL2, RL3, RL4, RL5) comportant chacune un point initial (L1A) et un point final (L1E) par refoulement de matière,
- chaque ligne de rainurage (RL1, RL2, RL3, RL4, RL5) s'étendant le long d'une ligne imaginaire (L1, L2, L3, L4, L5) qui lui est associée et qui correspond, quant à sa position respective et à son allure sur le flan (1), à la ligne de rainurage (RL1, RL2, RL3, RL4, RL5) respective et celle-ci faisant saillie de son début et/ou sa fin par une poursuite imaginaire de l'allure,
**caractérisé par le fait que** le flan (1) comprend au moins une ligne de rainurage (25) qui a réalisé un refoulement de matière en direction du premier côté environnement (18) vers le second côté environnement (20) et qui comporte au moins une ligne de rainurage (25) qui a réalisé un refoulement de matière en direction du second côté environnement (20) vers le premier côté environnement (18) et que l'épaisseur totale (S) du matériau composite (17) dans la zone de la ligne de rainurage (25), se réduit, par le refoulement de matière (25), d'une profondeur (T) de 20 % à 60 % et en ce que le flan (1) contient, comme éléments constitutifs, une couche adhésive (23) faisant suite à la couche de barrière (22) en direction du second côté environnement (20) et une seconde couche de polymère (24) faisant suite à la couche adhésive (23) qui fait face à un second côté environnement (20).

3. Enveloppe d'emballage (10), **caractérisée en ce que** l'enveloppe d'emballage (10) est fabriquée à partir d'un flan (1) conformément à la revendication 1 ou 2.

4. Emballage (15), **caractérisé en ce que** l'emballage (15) est fabriqué à partir d'une enveloppe d'emballage (10) conformément à la revendication 3.
